# EUROPÄISCHE PATENTANMELDUNG

(11) **EP 1 395 022 A1**
(43) Veröffentlichungstag der Anmeldung: **03.03.2004**
(21) Anmeldenummer: 03090232.4
(22) Anmeldetag: 24.07.2003
(51) Int. Cl.: H04M 1/2745, H04Q 7/32

(54) **Verfahren zum Erstellen einer Überwachungsliste**

(30) Priorität: 02.09.2002 DE 10241094
(71) Anmelder: SIEMENS AKTIENGESELLSCHAFT, 80333 München (DE)
(72) Erfinder: Hauptvogel, Andreas, 12103 Berlin (DE); Lemke, Michael, 13156 Berlin (DE)

(57) **Zusammenfassung**

Die Erfindung betrifft ein Verfahren zum Erstellen einer Überwachungsliste (LI) mittels eines Mobiltelefons (M), wobei die Überwachungsliste Kennungen (KN1,KN2,KN3) von solchen Personen oder Kommunikationsgeräten enthält, deren Status von einem mit einem Mobilfunknetz verbundenen Präsenzrechner (PR) überwacht und deren Statusinformationen auf einer Anzeigeeinheit (A) des Mobiltelefons angezeigt werden sollen. Dabei werden aus einem Telefonbuchspeicher (TS) des Mobiltelefons dort bereits als Telefonbuchdaten (D) abgespeicherte, Personen oder Kommunikationsgeräten zugeordnete Kennzeichen (K5,K6,K8) ausgelesen, auf ein Bediensignal (B) hin wird eine Auswahl dieser Kennzeichen als zu überwachende Kennzeichen markiert, und Kennungen (KN1,KN2,KN3) in Form von Informationen über diese zu überwachenden Kennzeichen werden zu der Überwachungsliste (LI) zusammengestellt.

## Beschreibung

Die Erfindung betrifft ein Verfahren zum Erstellen einer Überwachungsliste mittels eine Mobiltelefons.

Aus der Druckschrift 3GPP TS 23.141 V0.0.0. "3^{rd}.Generation Partnership Project; Technical Specification Group Services and System Aspects; Presence Service; Architecture and Functional Description (Release 6)" vom Juni 2002 ist ein "Präsenz-Service" (Presence Service) genannter Dienst bekannt, bei dem mittels eines Präsenzrechners (Presence Server) Eigenschaften von ausgewählten Kommunikationsteilnehmern überwacht werden. Zu solchen Eigenschaften gehören beispielsweise die jeweils aktuelle Erreichbarkeit über Telefon, schriftliche Kurznachrichten (SMS) oder Email. Zur Angabe, über welche Kommunikationsteilnehmer ein bestimmter Nutzer Informationen über derartige Präsenzeigenschaften zu erhalten wünscht, sendet der jeweilige Nutzer eine Überwachungsliste (Watcher List) an den Präsenzrechner. Diese Überwachungsliste enthält eine Aufzählung der den Nutzer interessierenden zu überwachenden Personen bzw. deren Kommunikationsendgeräte.

Der Erfindung liegt die Aufgabe zugrunde, ein einfaches und leicht durchführbares Verfahren zum Erstellen einer Überwachungsliste anzugeben.

Diese Aufgabe wird erfindungsgemäß gelöst durch ein Verfahren zum Erstellen einer Überwachungsliste mittels eines Mobiltelefons, wobei die Überwachungsliste Kennungen von solchen Personen oder Kommunikationsgeräten enthält, deren Status von einem mit einem Mobilfunknetz verbundenen Präsenzrechner überwacht und deren Statusinformationen auf einer Anzeigeeinheit des Mobiltelefons angezeigt werden sollen, bei dem aus einem Telefonbuchspeicher des Mobiltelefons dort bereits als Telefonbuchdaten abgespeicherte, Personen oder Kommunikationsgeräten zugeordnete Kennzeichen ausgelesen werden, auf ein Bediensignal hin eine Auswahl dieser Kennzeichen als zu überwachende Kennzeichen markiert wird, und Kennungen in Form von Informationen über diese zu überwachenden Kennzeichen zu der Überwachungsliste zusammengestellt werden. Bei diesem Verfahren ist besonders vorteilhaft, dass die in dem Telefonbuchspeicher des Mobiltelefons gespeicherten Telefonbuchdaten zur Erstellung der Überwachungsliste herangezogen werden. Es werden also vorteilhafterweise Daten, welche zur Vereinfachung des Aufbaus einer Telefonverbindung in dem Handy vorrätig gehalten werden, auch zur Erzeugung der Überwachungsliste verwendet. Dadurch brauchen solche Daten nicht erneut mittels des Mobiltelefons erfasst oder eingegeben werden, sondern können in einer bequemen Art und Weise erneut verwendet werden.

Bei einer vorteilhaften Ausgestaltungsform des erfindungsgemäßen Verfahrens wird die Überwachungsliste in einem weiteren Speicher des Mobiltelefons abgespeichert. Dadurch kann die Überwachungsliste in dem Mobiltelefon für eine spätere Ergänzung oder Überarbeitung vorrätig gehalten werden.

In bevorzugten Ausgestaltungsformen des erfindungsgemäßen Verfahrens können als Telefonbuchspeicher eine mit dem Mobiltelefon verbundene SIM-Karte oder ein vorgewählter Bereich eines RAM-Speichers des Mobiltelefons verwendet werden.

Das erfindungsgemäße Verfahren kann vorzugsweise so durchgeführt werden, dass die Kennungen erzeugt werden mittels einer Datenübernahme von Teilen der zu überwachenden Kennzeichen aus dem Telefonbuchspeicher. Eine derartige Datenübernahme (Kopiervorgang) kann vorteilhafterweise sehr schnell und einfach realisiert werden; durch Beschränkung der Datenübernahme auf überwachungsrelevante Teile der jeweiligen Kennzeichen wird der Speicherplatzbedarf für die Überwachungsliste gering gehalten.

Zur weiteren Erläuterung der Erfindung ist in
Figur 1 eine schematische Darstellung eines Ausführungsbeispiels eines mit einem Mobiltelefon verbundenen Mobilfunknetzes und in
Figur 2 ein detailliertes Ausführungsbeispiel des erfindungsgemäßen Verfahrens dargestellt.

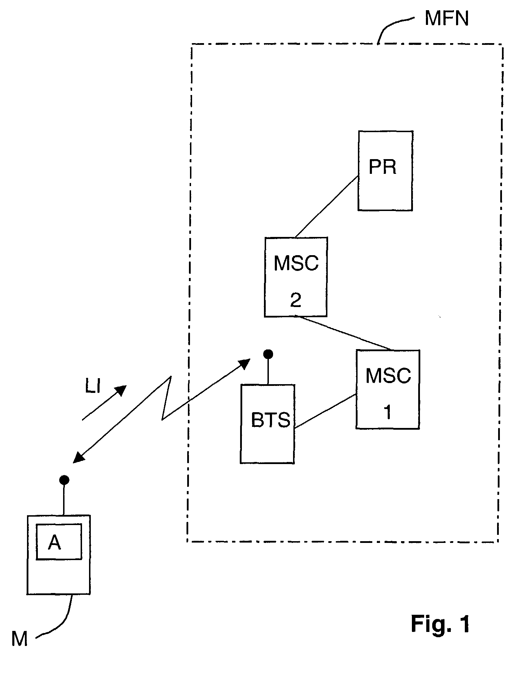

In Figur 1 ist schematisch ein Mobiltelefon M mit einer Anzeigeeinheit A dargestellt, welches über eine Luftschnittstelle mit einem Mobilfunknetz MFN verbunden ist. Die Luftschnittstelle verbindet das Mobiltelefon M mit einer Basisstation BTS (BTS = Base Transceiver Station), welche über eine erste Mobilvermittlungsstelle MSC1 (MSC = Mobile Services Switching Center) und eine zweite Mobilvermittlungsstelle MSC2 mit einem Präsenzrechner PR (PR = Presence Server) verbunden ist. Dabei kann sich der Präsenzrechner PR auch in einem weiteren Mobilfunknetz (in der Fig. 1 nicht dargestellt) befinden, wenn dieses weitere Mobilfunknetz mit dem in der Fig. 1 dargestellten Mobilfunknetz MFN verbunden ist. Von dem Mobiltelefon M wird eine Überwachungsliste LI erstellt und über die Luftschnittstelle, die Basisstation BTS und die Mobilvermittlungsstellen MSC1 und MSC2 an den Präsenzrechner PR übertragen.

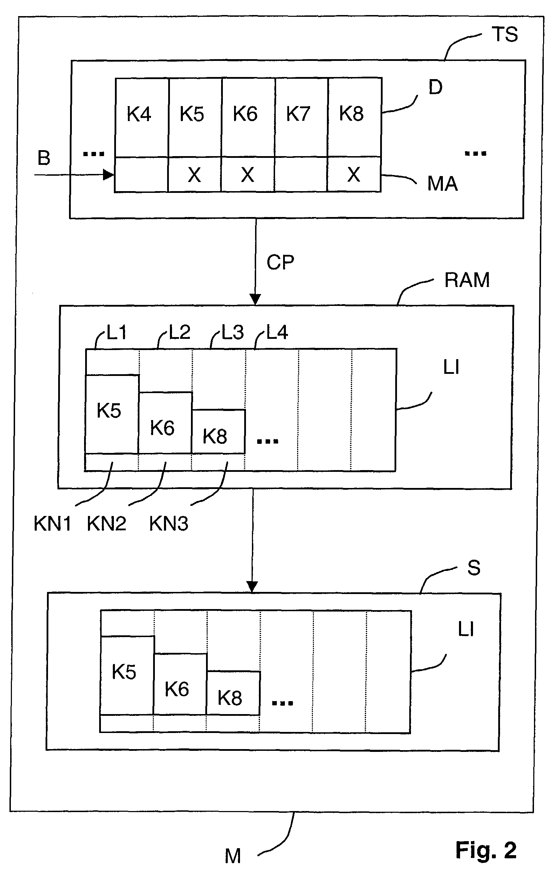

In Figur 2 sind die innerhalb des Mobiltelefons M ablaufenden Schritte zur Erstellung der Überwachungsliste LI dargestellt. In einem Telefonbuchspeicher TS des Mobiltelefons M sind Kennzeichen K4,K5,K6,K7 und K8 von Personen oder von Kommunikationsendgeräten gespeichert. Derartige Telefonbuchspeicher TS in Mobiltelefonen werden gelegentlich auch als Adreßbuchspeicher bezeichnet; dies erfolgt insbesondere dann, wenn in ihnen neben dem Namen und der Telefonnummer des Kommunikationsteilnehmers auch weitere Angaben wie Adressen oder persönliche Notizen abgespeichert sind.

Das Kennzeichen K5 des Telefonbuchspeichers TS enthält beispielsweise den Namen, die Anschrift und die Mobiltelefonnummer eines ersten Mobiltelefonnutzers, zu dem von dem Mobiltelefon M ausgehend in der Vergangenheit bereits mehrmals Mobiltelefonverbindungen aufgebaut worden sind. Aus diesem Grunde ist dieses Kennzeichen K4 als ein Bestandteil von Telefonbuchdaten D in dem Telefonbuchspeicher TS des Mobiltelefons M abgelegt. In analoger Weise enthalten die Kennzeichen K4, K6, K7 und K8 Daten und Informationen über vier andere potentielle Kommunikationspartner, zu denen von dem Mobiltelefon M ausgehend Kommunikationsverbindungen aufgebaut werden können. Die Kennzeichen K4, K5, K6, K7 und K8 bilden also einen Teil der in dem Telefonbuchspeicher TS gespeicherten Telefonbuchdaten D.

Ein solcher Telefonbuchspeicher TS kann beispielsweise dargestellt werden von einer SIM-Karte (SIM = Subscriber Identity Module) des Mobiltelefons M. Als Telefonbuchspeicher kann jedoch auch ein vorgewählter Bereich des Arbeitsspeichers RAM (RAM = Random Access Memory) des Mobiltelefons verwendet werden; dieses ist besonders vorteilhaft, wenn eine größere Menge an Telefonbuchdaten in dem Telefonbuchspeicher gespeichert wird, so dass die Speicherkapazität einer SIM-Karte überschritten wird.

Im vorliegenden Ausführungsbeispiel sollen nun die Personen bzw. Kommunikationsgeräte (z. B. Mobiltelefone, Festnetztelefone, Laptops, Palmtops oder Computer mit Internetbrowsern), welchen die Kennungen K5, K6 und K8 zugeordnet sind, überwacht werden. Zu diesem Zwecke werden die Kennzeichen K4, K5, K6, K7 und K8 aus dem Telefonbuchspeicher TS ausgelesen und beispielsweise auf der Anzeigeeinheit A (vgl. Figur 1) des Mobiltelefons dargestellt. Auf ein entsprechendes Bediensignal B (z. B. eine Tastatureingabe an dem Mobiltelefon M) hin werden die in diesem Beispiel ausgewählten Kennzeichen K5, K6 und K8 mit einer Markierung MA versehen. Dies kann z. B. geschehen, indem in dem Telefonbuchspeicher TS ein dem jeweiligen Kennzeichen zugeordnetes Flag X gesetzt (d.h. eine Speicherstelle mit einem vorbestimmten Wert versehen) wird. Daraufhin erfolgt eine Datenübernahme CP (ein Kopiervorgang "Copy") von dem Telefonspeicher TS zu einem Arbeitsspeicher RAM des Mobiltelefons. Bei dieser Datenübernahme werden mindestens Teile der markierten Kennzeichen in den Arbeitsspeicher RAM übernommen. Im vorliegenden Ausführungsbeispiel wird das Kennzeichen K5 komplett übernommen und bildet einen (als eine erste Kennung KN1 bezeichneten) Datensatz in dem Arbeitsspeicher RAM. Von dem Kennzeichen K6 des Telefonbuchspeichers TS wird jedoch nur ein Teil der Informationen in den Arbeitsspeicher RAM kopiert. Dieser Informationsteil (durch ein kleineres Rechteck K6 symbolisiert) bildet eine zweite Kennung KN2 in dem Arbeitspeicher RAM. Schließlich wird ein noch geringerer Datenanteil des Kennzeichens K8 aus dem Telefonbuchspeicher TS in den Arbeitsspeicher kopiert, wodurch eine dritte Kennung KN3 gebildet wird. Die erste Kennung KN1 stellt ein erstes Listenelement L1 der Überwachungsliste LI dar, die zweite Kennung KN2 bildet ein zweites Listenelement L2 und die dritte Kennung K3 bildet ein drittes Listenelement L3. Die Listenelemente L1, L2, L3 und ggf. weitere Listenelemente L4 usw. werden schließlich zu der Überwachungsliste LI zusammengefügt.

Schließlich wird die komplette Überwachungsliste LI in einem weiteren Speicher S (beispielsweise in einem Kurzzeitspeicher) des Mobiltelefons M zwischengespeichert und in einem späteren Schritt von dem Mobiltelefon M zu dem Präsenzrechner PR übertragen.

Bei dem erfindungsgemäßen Verfahren werden in dem Telefonbuch TS des Mobiltelefons M gespeicherte, potentiellen Kommunikationspartnern zugeordnete Daten zum Erstellen einer für einen Präsenzdienst zu erstellenden Überwachungsliste verwendet. Diese Daten brauchen daher vorteilhafterweise nicht für die Listenerstellung in das mobile Kommunikationsendgerät eingegeben werden. Dadurch ergibt sich zum einen ein sehr bequemes Listenerstellungsverfahren, mit dem insbesondere in kurzer Zeit eine Liste erstellt werden kann. Zum anderen wird - gerade bei wiederholten Listenerzeugungen - die Notwendigkeit einer wiederholten Dateneingabe mittels Eingabeeinrichtungen (z. B. Tasten) des Mobiltelefons vermieden, wodurch auch eine Verlängerung der Lebensdauer dieser Eingabeeinrichtungen erreicht wird.

## Patentansprüche

1. Verfahren zum Erstellen einer Überwachungsliste (LI) mittels eines Mobiltelefons (M), wobei die Überwachungsliste (LI) Kennungen (K5,K6,K8) von solchen Personen oder Kommunikationsgeräten enthält, deren Status von einem mit einem Mobilfunknetz (MFN) verbundenen Präsenzrechner (PR) überwacht und deren Statusinformationen auf einer Anzeigeeinheit (A) des Mobiltelefons (M) angezeigt werden sollen, bei dem
- aus einem Telefonbuchspeicher (TS) des Mobiltelefons (M) dort bereits als Telefonbuchdaten (D) abgespeicherte, Personen oder Kommunikationsgeräten zugeordnete Kennzeichen (K4,K5,K6,K7,K8) ausgelesen werden,
- auf ein Bediensignal (B) hin eine Auswahl dieser Kennzeichen (K4,K5,K6,K7,K8) als zu überwachende Kennzeichen (K5,K6,K8) markiert (X) wird, und
- Kennungen (KN1,KN2,KN3) in Form von Informationen über diese zu überwachenden Kennzeichen (K5,K6,K8) zu der Überwachungsliste (LI) zusammengestellt werden.

2. Verfahren nach Anspruch 1,
**dadurch gekennzeichnet, dass**
- die Überwachungsliste (LI) in einem weiteren Speicher (S) des Mobiltelefons (M) abgespeichert wird.

3. Verfahren nach Anspruch 1 oder 2,
**dadurch gekennzeichnet, dass**
- als Telefonbuchspeicher (TS) eine mit dem Mobiltelefon verbundene SIM-Karte verwendet wird.

4. Verfahren nach Anspruch 1 oder 2,
**dadurch gekennzeichnet, dass**
- als Telefonbuchspeicher (TS) ein vorgewählter Bereich eines RAM-Speichers des Mobiltelefons verwendet wird.

5. Verfahren nach einem der vorhergehenden Ansprüche,
**dadurch gekennzeichnet, dass**
- die Kennungen (KN1,KN2,KN3) erzeugt werden mittels einer Datenübernahme (CP) von Teilen der zu überwachenden Kennzeichen (K5,K6,K8) aus dem Telefonbuchspeicher (TS).
